# EUROPEAN PATENT SPECIFICATION

(11) **EP 0 495 273 B1**
(45) Date of publication and mention of the grant of the patent: **11.09.1996**
(21) Application number: 91300318.2
(22) Date of filing: 16.01.1991
(51) Int. Cl.: F21V 8/00, G09F 13/18

(54) **Thin panel illuminator**
Dünne Plattenleuchte
Panneau lumineux mince

(43) Date of publication of application: 22.07.1992
(73) Proprietor: LUMITEX INC., Cleveland Ohio 44133-9908 (US)
(72) Inventor: Pristash, David J., Brecksville, Ohio 44141 (US); Parker, Jeffery R., Concord, Ohio 44060 (US)
(74) Representative: McNeight, David Leslie

(56) References cited:
- EP-A- 0 242 308
- EP-A- 0 359 450
- DE-C- 652 165
- FR-A- 1 035 788
- US-A- 5 005 108

## Description

This invention relates generally, as indicated, to a thin panel illuminator including a solid transparent panel member for conducting light and extractor means for causing light conducted by the panel member to be emitted along the length thereof.

Light panel illuminators are generally known. However, the present invention relates to several different panel illuminator configurations which are less expensive to make and/or provide for better control over the light output from the panel. Also, the present invention provides for more efficient transmission of light from a light source to the light emitting panel.

European Patent Application No. 0 359 450 discloses a panel illuminator comprising one or more layers of woven optical fibers having bends at discrete locations along the length of the fibers to allow light to be emitted therefrom.

European Patent Application No. 0 242 308 discloses a panel illuminator comprising a solid transparent panel member having a greater cross sectional width than thickness and depressions or striations on the front and rear surfaces for causing conducted light to be emitted from the surfaces along the length of the panel.

According to the invention there is provided a panel illuminator assembly comprising a solid transparent panel member having a greater cross sectional width than thickness and top and bottom surfaces and an input edge, and deformities or irregularities for causing conducted light to be emitted from one of said surfaces along the length of said panel member, characterised by transition means for receiving focused light from a light source and transmitting the focused light to said input edge for conduction by said panel member, said transition means including an input surface at one end shaped to permit a light source to be easily focused thereon, and an output surface at another end having a shape substantially corresponding in shape to said input edge of said panel member and connected thereto.

The invention will be further apparent from the following descriptions with reference to the accompanying drawings in which:-
Fig.1 is a schematic perspective view of one form of thin panel illuminator in accordance with this invention;
Fig.2 is a schematic fragmentary persepctive view of a solid transparent light emitting ribbon panel in accordance with this invention;
Fig.3 is an enlarged fragmentary side elevation view of the ribbon panel of Fig.2 schematically showing how light rays are transmitted through and emitted from such panel;
Figs. 4 - 6 are perspective views of various other solid transparent light emitting panels in accordance with this invention;
Fig. 7 is a side elevation view of another form of solid transparent light emitting panel in accordance with this invention schematically showing light rays entering opposite ends of the panel and being emitted therefrom;
Fig. 8 is a schematic side elevation view of another form of thin panel illuminator in accordance with this invention;
Fig. 9 is a top plan view of the thin panel illuminator of Fig. 8;
Fig. 10 is a top plan view of still another form of thin panel illuminator in accordance with this invention;
Figs. 11-14 are schematic longitudinal sections of several forms of solid transparent light emitting panels in accordance with this invention;
Fig. 15 is a top plan view of one form of transition device in accordance with this invention for converting an easily focused cross-sectional shape of light to the shape of a panel input surface;
Figs. 16-19 are schematic perspective views of various other forms of transition devices in accordance with this invention; and
Figs. 20-22 are schematic perspective views of several different shapes of panels constructed in accordance with this invention.

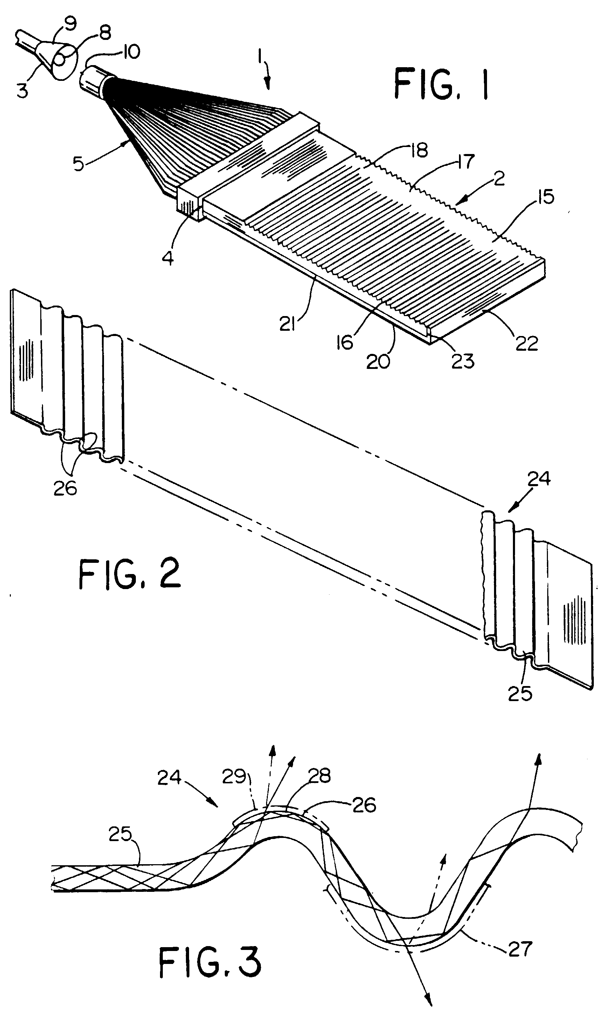

Referring now in detail to the drawings, and initially to Fig. 1, there is schematically shown one form of thin panel illuminator in accordance with this invention including a solid transparent light emitting panel 2 and a light source 3 which generates and focuses light, in a predetermined pattern, on a transition device 5 which is used to make the transition from the light source 3 target shape to the light emitting panel input edge 4 shape as shown. The light that is transmitted from the light source 3 to the light emitting panel 2 may be emitted along the length of the panel as desired to produce a desired light output distribution to fit a particular application.

A light source 3 of any suitable type may be used, including, for example, any of the types disclosed in US. Patent No. 4,897,771. Light source 3 includes a radiation source 8 such as an arc lamp, an incandescent bulb, a lens end bulb, an LED or a fluorescent tube or the like, and may have a collector 9 which collects the light emitted by the radiation source 8 and uniformly focuses the light on the input end 10 of the transition device 5 with predetermined ray angles to fit a particular application. For the thin panel illuminator 1 of the present invention to operate efficiently, the light source 3, transition device 5 and light emitting panel 2 must be designed to fit each other as well as the particular application. However, it should be understood that the light source 3, transition device 5 and light emitting panel 2 may also be used separately if desired.

Light emitting panel 2 comprises a solid transparent or translucent wave guide 15 made of glass, plastic or other suitable transparent or translucent material, with disruptions 16 on at least one side 17 formed as by cutting, molding, coating, forming or otherwise causing mechanical, chemical or other deformations in the exterior surface 18 thereof. When these disruptions 16 are struck by the light rays entering the panel input edge 4, they cause some of the light rays to exceed the internal critical angle and be emitted from the panel. The amount of light emitted from the panel will depend on the type, shape, depth and frequency of the disruptions 16. For example, if the exterior surface 18 is mechanically deformed at decreasingly spaced intervals as the distance from the light source 3 increases, there will be more uniform emission of light from the surface 18 when viewed from a distance. Also, such disruptions 16 may vary in depth and shape along the length of the panel 2 to produce a desired light output distribution.

A back reflector 20 may be provided on the side 21 of the panel 2 opposite the side 17 with the disruptions 16 therein. In like manner, an end reflector 22 may be provided on the end edge 23 opposite the input edge 4 to minimize the amount of light escaping from these surfaces.

Another light emitting panel 24 in accordance with this invention is schematically shown in Fig. 2 and comprises a thin light conducting ribbon or film 25 bent into a wave form of predetermined pattern. Although the dimensions of the panel 24 may vary, as an example, the panel 24 may be approximately .020 inch (0.05cm) thick and have an overall height of approximate .040 inch (0.1cm) and be of any desired width or length depending on particular application. Such a panel 24 may be made in any suitable manner, for example, by vacuum forming or injection molding. During the forming operation, the ribbon or film 25 is bent in a predetermined pattern, with the number of bends 26 per unit length, the effective bend radius, the panel thickness, the index of refraction ratio, and the internal ray distribution determining the light output and efficiency of the panel.

When the wave guide 25 is bent, certain light rays that were previously internally reflected will be emitted if the bends are below a critical radius. The critical radius is the radius of curvature at which these light rays first start to be emitted. By making the bends 26 more or less pronounced, the percentage of light emitted can be controlled for a given input ray distribution.

As schematically shown in Fig. 3, as certain light rays strike a bend surface 26 of panel 24, they exceed the internal critical angle and are emitted. If desired, one side of panel 24 may be provided with a back reflector 27 that reflects the light emitted from that side back through the panel towards an application as schematically shown in phantom lines in Fig. 3. Moreover, selected light emitting areas 28 of the panel 24 may be coated with a transparent coating 29 having a different refractive index than the light conducting ribbon or film 25 to cause changes in the attenuation of light being emitted from the panel 24 as further schematically shown in phantom lines in Fig. 3.

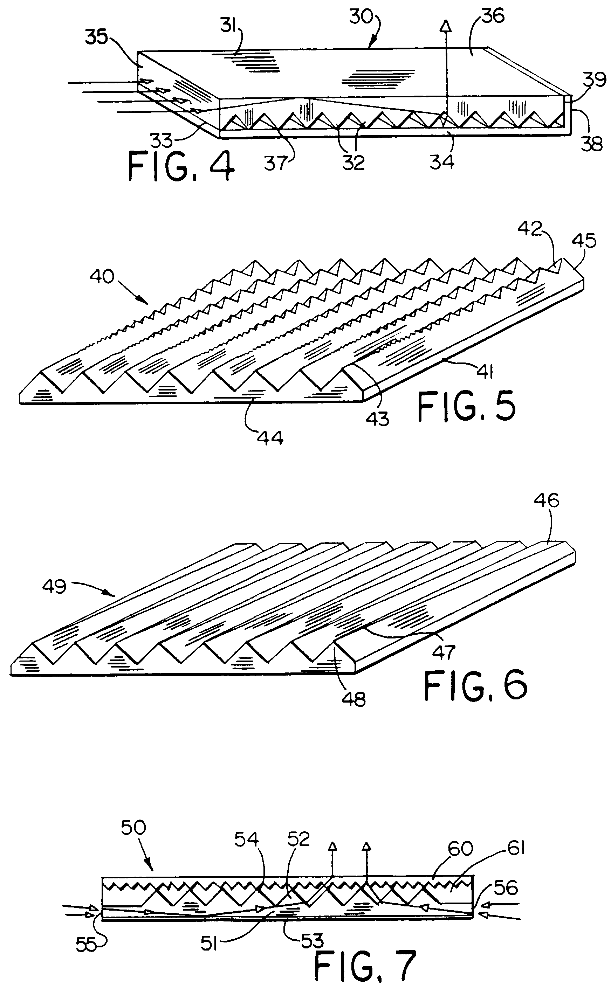

Fig. 4 shows another form of light emitting panel 30 in accordance with this invention including a solid transparent wave guide 31 similar to the wave guide 15 of Fig. 1 but having a prismatic surface 32 on a side 33 which is covered by a back reflector 34. Accordingly, when the prismatic surface 32 is struck by light rays entering an input end edge 35 of the wave guide 31, causing the light rays to exceed the internal critical angle and be emitted, the emitted light rays will be reflected back through the panel by the back reflector 34 and out the other side 36 of the panel as schematically shown in Fig. 4. The angles and/or depth of these prismatic surfaces 32 may be varied along the length of the panel 30 to produce uniform or other desired light output from the other side 36 of the panel.

In Fig. 4, the light rays are shown entering the panel 30 through an end edge 35 generally perpendicular to the prism edges 37. Also, an end reflector 38 is shown on the end edge 39 of the panel opposite the input end edge 35. However, if desired, light rays may be caused to enter the panel 30 from both end edges 35, 39, in which event the end reflector 38 would be eliminated.

Fig. 5 shows another form of light emitting panel 40 in accordance with this invention comprising a solid transparent prismatic film 41 having deformities 42 cut, molded or otherwise formed along the top of the prism edges 43. Although the deformities 42 are shown as being of a generally triangular shape, they may be of any desired shape that causes light to be emitted, and may vary in depth and shape along the length of the prism edges 43 to produce a desired light output distribution. In this embodiment, light rays are caused to enter the panel 40 from one or both side edges 44, 45 in a direction generally parallel to the prism edges 43.

Alternatively, diffuser surfaces 46 may be formed along the top edges 47 of the prismatic surfaces 48 of a prismatic film light emitting panel 49 as schematically shown in Fig. 6. These diffuser surfaces 46 may vary in depth and/or width along the length of the panel 49, and may comprise a roughened surface, a lenticular surface, or a prismatic surface or the like that consists of multiple surface deformities. A roughened surface, for example, may be produced by grinding, sanding, laser cutting or milling. Also, both of the light emitting panels 40 and 49 shown in Figs. 5 and 6 may have prismatic surfaces on both the top and bottom surfaces rather than on just one surface as shown, and one or the other of the top or bottom surface may be provided with a back reflector similar to the back reflector 34 shown in Fig. 4 to redirect emitted light back through the panel toward a particular application.

Fig. 7 schematically shows another form of light emitting panel 50 in accordance with this invention which also comprises a solid transparent prismatic film 51 having a prismatic surface 52 on one side and a back reflector 53 on the other side, similar to the light emitting panel 2 shown in Fig. 1. Light rays may be caused to enter the panel 50 perpendicular to the wave guide prism edges 54 from one or both end edges 55, 56 of the panel, and are internally reflected until they strike a deformity (in this case an edge 54 of the panel prismatic surfaces 52) which causes the light rays to be emitted. The size, shape and depth of the wave guide deformities 52 may be varied along the length of the panel to produce a desired light output distribution. Also, a back reflector 53 may be provided on the bottom side of the panel 50 to redirect light back through the panel.

In addition, the panel 50 includes a second prismatic film 60 disposed in close proximity to the panel prismatic surface 52 to shift the angular emission of light toward a particular application. The second prismatic film 60 may be separated from the first prismatic film or wave guide 51 by air or an epoxy filled gap 61. If the wave guide 51 and second prismatic film 60 are epoxied together, the epoxy 61 must be transparent and have a suitable index of refraction. Also, multiple prismatic films may be used in place of the single prismatic film 60, or the prismatic film 60 may be replaced by a diffuser or lenticular lens or the like.

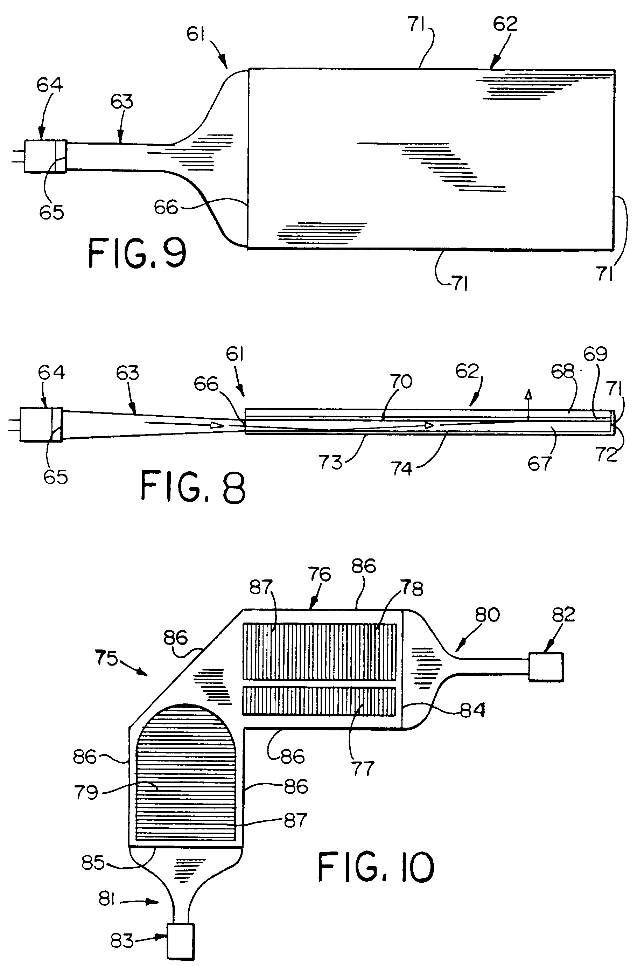

Other examples of thin panel illuminators in accordance with this invention are schematically shown in Figs. 8-10. The thin panel illuminator 61 shown in Figs. 8 and 9 includes a light emitting panel 62 and transition device 63 for transmitting light from a light source 64 focused on its input surface 65 to the panel input surface (end edge) 66. In this embodiment, the light emitting panel 62 comprises a laminated structure including a solid transparent wave guide 67 and extractor 68 joined together as by means of an adhesive layer 69 or the like. Light that enters the wave guide 67 from the transition device 63 is internally reflected until it strikes the wave guide-extractor interface 70 and is emitted from the extractor 68 toward a particular application. The index of refraction of the adhesive layer 69 may be varied relative to the indexes of refraction of the wave guide 67 and extractor 68 to produce a desired light output. If desired, the extractor 68 may be joined to the wave guide 67 by methods other than adhesive such as clamping, fastening, heat sealing and solvent gluing and the like. Also, the extractor 68 may consist of one or more coatings applied directly to selected areas of the top or bottom surfaces of the wave guide 67. These coatings may vary in frequency, index of refraction, color, and/or shape along the length of the panel 62. Reflectors 71 may also be provided at the end edge 72 of the wave guide 67 opposite the input edge 66 as well as at the side edges to reflect light back into the wave guide. Also, a back reflector 73 may be provided on the bottom surface 74 of the wave guide to reflect light back through the wave guide.

The thin panel illuminator 75 of Fig. 10 also includes a solid transparent light emitting panel 76, but which has multiple light output regions 77, 78, 79 of various shapes, and multiple transition devices 80, 81 for transmitting light from multiple light sources 82, 83 to different panel input edges 84, 85. In the Fig. 10 embodiment, two such transition devices 80, 81 are shown connected to two panel input edges 84, 85 which are substantially perpendicular to each other. The sides and back of the panel 76 may have reflective coatings 86 thereon.

Each output region 77-79 contains deformities 87 produced, for example, by molding, machining, stamping, etching, abrading, or laser cutting or the like to cause light to be emitted therefrom. The light output pattern or uniformity of light output from these output regions 77-79 may be controlled by varying the shape, depth and frequency of the deformities 87 relative to the input light ray distribution. For example, the various light output regions 77-79 of the panel 76 may be etched, roughened or cut into different shapes and levels of deformities using a laser by varying the power, position and cutting speed of the laser.

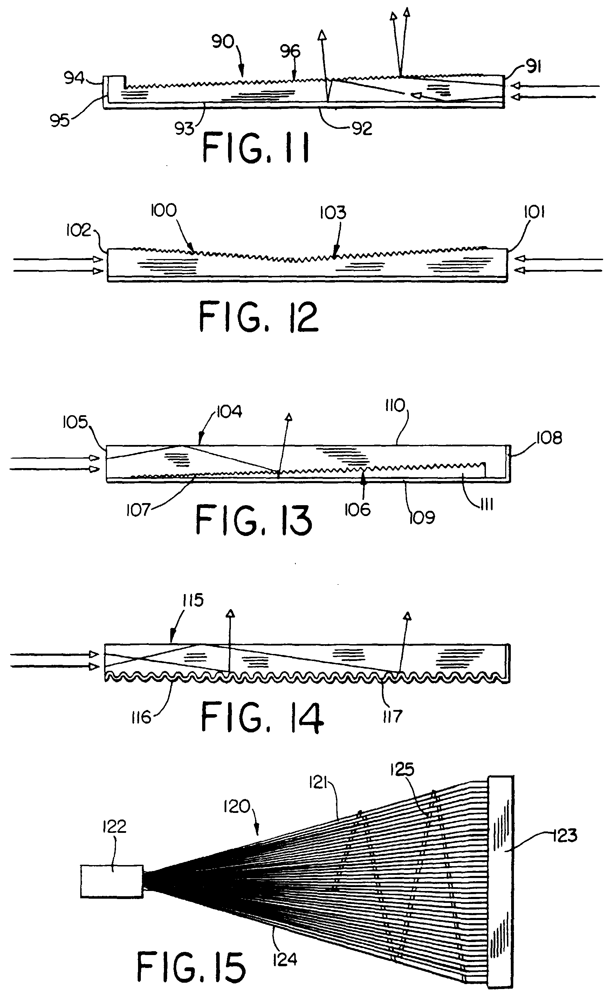

Figs. 11-14 schematically illustrate solid transparent light emitting panels having differently shaped light output regions. Fig. 11 shows a panel 90 with light input at one end edge 91 only and typical light ray travel. In this embodiment, panel 90 has a back reflector 92 on the bottom surface 93, an end reflector 94 on the end edge 95 opposite the input end edge 91, and a deformed light output region 96 whose depth progressively decreases along the length of the panel from the input end edge 91 toward the opposite end edge 95.

Fig. 12 shows a panel 100 with light input at opposite end edges 101 and 102 and a deformed output region 103 that progressively decreases in depth from both input end edges 101, 102 toward the middle of the length of the panel. Fig. 13 shows a panel 104 with light input at one end edge 105 only and a deformed light output region 106 on the bottom surface 107 whose depth progressively decreases from the input end edge 105 toward the opposite end edge 108. Also, a back reflector 109 is shown mounted on the bottom surface 107 of the panel 108 to redirect the light that is emitted from the light output region 106 back through the panel and out the top surface 110. In this embodiment, either an air gap or a transparent fill material 111 having a suitable index of refraction may separate the back reflector 109 from the panel 104.

Panel 115 shown in Fig. 14 is similar to panel 104 of Fig. 13 except that the back reflector 116 of Fig. 14 is deposited directly on the deformed light output region 117 and the depth of the panel is substantially uniform throughout its length.

In each instance, the light input surfaces (end or side edges) of the light emitting panels may be lens shaped or tapered to alter the input light ray distribution. Also, such light input surfaces may be coated with an anti-reflective coating or a coating that changes the numerical aperture of the panel. The numerical aperture is the sine of the vertex angle of the largest cone of input rays that can enter an optical system or element multiplied by the refractive index of the medium in which the vertex of the cone is located. Moreover, the light input surfaces, bottom surface and/or top surface of the panels may be coated to reflect or absorb certain frequencies of light.

From the foregoing it will be apparent that the wave guide confines and directs light in a direction determined by its boundaries, whereas the extractor causes light to be emitted from the wave guide. Examples of wave guides that may be utilized in the thin panel illuminators of the present invention include glass sheets, plastic films, liquid filled transparent enclosures, and crystals and the like. Also, examples of extractors that may be utilized in the thin panel illuminators include prismatic films, diffusers, lenticular lenses, coatings and other systems or materials that cause the internal critical angle to be exceeded which in turn causes light to be emitted.

Referring next to Figs. 15-19, different forms of transition devices for use in transmitting light from a remote location to the light emitting panels of the present invention are shown. As previously indicated, the purpose of such transition devices is to transmit light focused on its input surface or surfaces to a light emitting panel by converting a relatively easily focused cross-sectional shape of light to the shape of the panel input surface. The transition device 120 shown in Fig. 15 comprises a plurality of optical fibers 121 having a round or other shaped connector 122 at one end on which a source of light is easily focused and a rectangular or other shaped connector 123 at the other end substantially corresponding in shape to the panel input surface. The optic fibers 121 may be made of glass or a suitable transparent plastic material, and may be formed into a ribbon-like cable 124 by loosely weaving cross (fill) threads 125 between the optical fibers 121 which act as a harness without causing the optical fibers to bend to the degree necessary to emit light from the transition device 120. Preferably, the optical fiber strands 121 of both of the connectors 122, 123 are scrambled to produce a higher uniformity in the transition device output. Moreover, the ends of the connectors 122, 123 are desirably highly polished to minimize losses, and may be coated to reflect or absorb certain wavelengths of light.

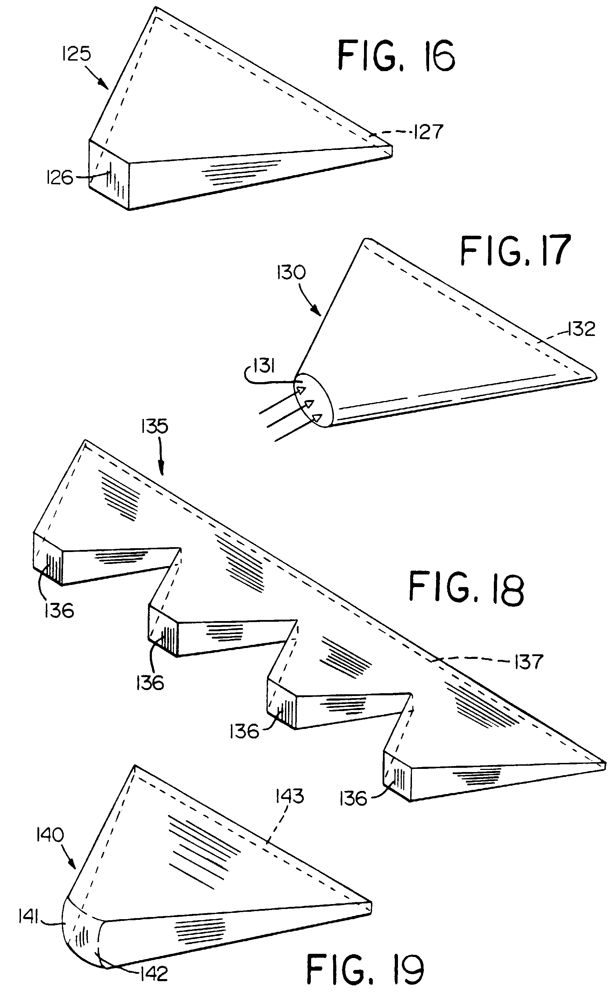

In lieu of using optical fibers in the transition device, the transition device may be made from a solid transparent material such as glass, plastic or the like having an input surface at one end of a cross-sectional shape on which a light source is easily focused such as round or square and having an output surface at the other end in the shape of the panel input surface. Fig. 16 shows one such solid transparent transition device 125 having a substantially square input surface 126 at one end and a substantially rectangular output surface 127 at the other end, whereas Fig. 17 shows another solid transparent transition device 130 having a round input surface 131 at one end and a substantially rectangular output surface 132 at the other end. Also, Fig. 18 shows a solid transparent transition device 135 including multiple input (or output) surfaces 136 at one end and a single output (or input) surface 137 at the other end. Fig. 19 shows another solid transparent transition device 140 with a lens 141 at the input surface 142 shaped to spread the light evenly across its output surface 143. In like manner, the output surface of the solid transition devices as well as the input surface of the light emitting panels may be lens shaped or tapered to alter the input light ray distribution.

Although the respective input and output surfaces of the various transition devices are shown as square, round or rectangular, they may be elliptical or any other shape necessary to fit a particular application. Moreover, multiple light sources may be used with a single panel or multiple panels used with a single light source by providing the transition device with multiple input connectors leading to a single output connector or a single input connector leading to multiple output connectors as schematically shown in Fig. 18. Furthermore, filters may be placed between the light source and panel or transition device to reflect or absorb certain wavelengths of light. Also, a moving or rotating filter may be used to produce color effects.

Although the various solid transparent transition devices are shown separate from the light emitting panels, it will be appreciated that such transition devices may be formed as an integral part of the panels.

As will be apparent, the various thin panel illuminators disclosed herein may be used for a great many different applications, including for example general lighting, phototherapy treatment, and radiation curing of adhesives and epoxies and the like. Typical general lighting applications include back lighting of liquid crystal displays or transparencies or the like, task lighting, machine vision lighting, safety lighting for both commercial and industrial as well as automotive applications, explosion-proof lighting, underwater lighting, display lighting and infrared heating and the like. Phototherapy treatment includes such applications as tanning lights, phototherapy of neonatal hyperbilirubinemia, photochemotherapy, photosynthesis of plants, and so on. Also, radiation curing of adhesives and epoxies may be used in a wide variety of applications including aerospace, dental, circuit board, electronic component, and optical component manufacturing, to name a few.

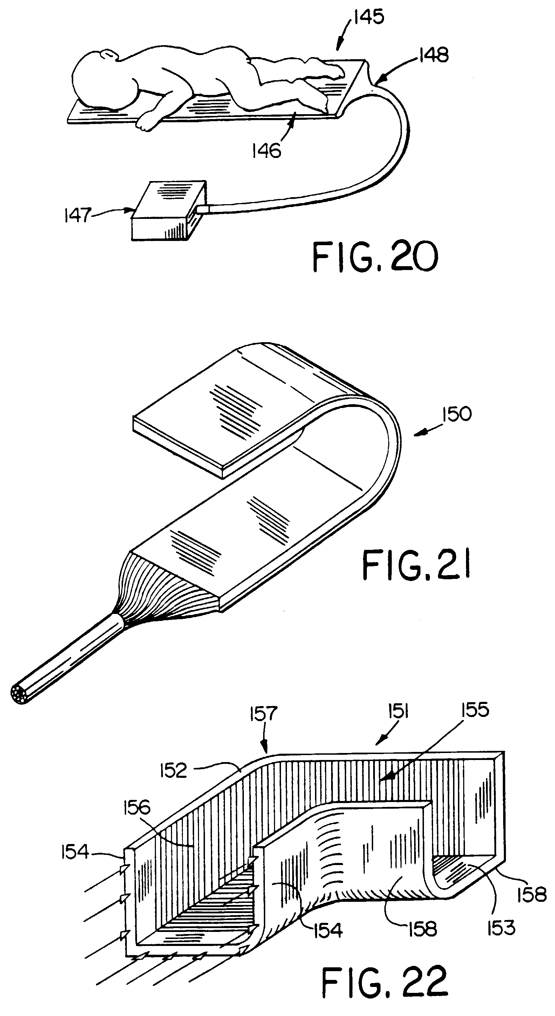

To facilitate use of such thin panel illuminators for phototherapy, the panels may be formed in the shape of a pad, belt, collar, blanket, strap or other suitable shape. Fig. 20 schematically illustrates a thin panel illuminator 145 in accordance with this invention being used for phototherapy treatment of infants including a solid transparent light emitting panel 146 in the shape of a pad and a light source 147 designed for example to emit sufficient radiation in spectral regions that lower plasma bilirubin levels. The light source 147 may also be designed to reduce output of infrared and ultraviolet radiation that may be harmful to the infant. In addition, such light source may be designed to provide sufficient illuminance and color rendering for inspection of an infant's skin color. A transition device 148 in accordance with this invention transmits the light from the light source 147 to the light emitting panel 146 in the manner previously described.

Although the light emitting panel 146 is shown in Fig. 20 as being flat, it will be appreciated that the panel may be curved or otherwise formed to emit light in a desired manner or on a particular location. Fig. 21 schematically shows a light emitting panel 150 bent or formed to fit a particular application. Also, Fig. 22 shows another light emitting panel 151 in accordance with this invention in the shape of a channel 152 having a bottom wall 153, spaced apart side walls 154 and an open top 155, with deformities 156 along the interior length of the bottom and side walls 153, 154 to cause light to be emitted interiorly. The channel 152 may be curved or bent at 157 intermediate its length with the radius of curvature around which the light travels being sufficiently large that light is not emitted. Also, a reflective surface 158 may be applied to the exterior surfaces of the panel to redirect light interiorly back through the panel bottom and side walls 153, 154 toward a particular application.

## Claims

1. A panel illuminator assembly comprising a solid transparent panel member (2,24,30,40,49,50,62,76,90,100,104,115) having a greater cross sectional width than thickness and top and bottom surfaces and an input edge, and deformities or irregularities (16,24,32,42,46,54,70,87,96, 103, 106,117) for causing conducted light to be emitted from one of said surfaces along the length of said panel member, characterised by transisition means (5,120, 125, 130, 135, 140) for receiving focused light from a light source and transmitting the focused light to said input edge for conduction by said panel member, said transition means including an input surface (10,65,122,126,131, 136,141) at one end shaped to permit a light source to be easily focused thereon, and an output surface (123, 127, 132, 137, 143) at another end having a shape substantially corresponding in shape to said input edge of said panel member and connected thereto.

2. The assembly of claim 1 further characterised in that said panel member (24) is formed into a wave form of predetermined pattern having oppositely facing bends (26) extending generally transversely across the entire width of said panel member (24) at spaced apart intervals along the axial length of said panel member (24) which cause light conducted by said panel member (24) to be emitted from said bends.

3. The assembly of claim 2 further characterised by a coating (29) on said panel member (24) having a refractive index that changes the attentuation of the light emitted from said panel member (24).

4. The assembly of claim 1 further characterised in that said transmission means comprises a solid transparent member (125, 130, 135, 140).

5. The assembly of claim 4 further characterised in that said transition means (135) includes plurality of input surfaces (136) for receiving focused light from a plurality of light sources.

6. The assembly of claim 4 further characterised by a plurality of solid transparent panel members, said transition means (135) including a plurality of output surfaces (136) for transmitting focused light to said plurality of panel members.

7. The assembly of claim 1 further characterised by a prismatic surface (32,46,52,60) on one of the surfaces of said panel member.

## Patentansprüche

1. Tafelbeleuchtungsanordnung mit einem festen transparenten Tafelteil (2,24,30,40,49,50,62,76, 90,100,104,115), das eine größere Querschnittsbreite als Dicke und eine obere und untere Oberfläche und eine Eingangskante hat sowie Verformungen oder Unregelmäßigkeiten (16,24,32,42,46, 54,70,87,96,103,106,117), um zu bewirken, daß geführtes Licht aus einer der besagten Oberflächen entlang der Länge des Tafelteils emittiert wird, gekennzeichnet durch Übergangsmittel (5, 120,125,130,135,140) zum Empfang fokussierten Lichts von einer Lichtquelle und Übertragen des fokussierten Lichts zu der Eingangskante für die Leitung durch das Tafelteil, wobei die Übergangsmittel eine Eingangsfläche (10,65,122,126, 131,136,141) an einem so geformten Ende, daß eine Lichtquelle leicht hierauf fokussiert werden kann, und eine Ausgangsfläche (123,127,132, 137,143) an einem anderen Ende, dessen Form im wesentlichen der Form der Eingangskante des Tafelteils entspricht, und das damit verbunden ist, enthalten.

2. Anordnung nach Anspruch 1, weiterhin dadurch gekennzeichnet, daß das Tafelteil (24) in einer Wellenform mit vorbestimmtem Muster gebildet ist mit gegenüberliegend zugewandten Bogen (26), die sich im allgemeinen quer über die gesamte Breite des Tafelteils (24) erstrecken in gegenseitigen Abständen entlang der axialen Länge des Tafelteils (24), welche bewirken, daß von dem Tafelteil (24) geleitetet Licht von den Bogen emittiert wird.

3. Anordnung nach Anspruch 2, weiterhin gekennzeichnet durch eine Beschichtung (29) auf dem Tafelteil (24) mit einem Brechungsindex, der die Dämpfung des von dem Tafelteil (24) emittierten Lichts ändert.

4. Anordnung nach Anspruch 1, weiterhin dadurch gekennzeichnet, daß die Übertragungsmittel ein festes transparentes Teil (125,130,135,140) aufweisen.

5. Anordnung nach Anspruch 4, weiterhin dadurch gekennzeichnet, daß die Übergangsmittel (135) mehrere Eingangsflächen (136) enthalten für den Empfang von fokussiertem Licht von mehreren Lichtquellen.

6. Anordnung nach Anspruch 4, weiterhin gekennzeichnet durch mehrere feste transparente Tafelteile, wobei die Übergangsmittel (135) mehrere Ausgangsflächen (136) enthalten zum Übertragen von fokussiertem Licht zu den mehreren Tafelteilen.

7. Anordnung nach Anspruch 1, weiterhin gekennzeichnet durch eine prismatische Oberfläche (32, 46,52,60) auf einer der Oberflächen des Tafelteils.

## Revendications

1. Ensemble illuminateur en panneau comprenant un élément de panneau transparent solide (2, 24, 30, 40, 49, 50, 62, 76, 90, 100, 104, 115) ayant une largeur en coupe transversale plus grande que l'épaisseur, et des surfaces supérieures et inférieures et un bord d'entrée, et des déformations ou des irrégularités (16, 24, 32, 42, 46, 54, 70, 87, 96, 103, 106, 117) pour provoquer une émission de lumière conduite par une desdites surfaces le long de la longueur dudit élément de panneau, caractérisé par un moyen de transition (5, 120, 125, 130, 135, 140) pour recevoir la lumière focalisée d'une source lumineuse et pour transmettre la lumière focalisée audit bord d'entrée pour une conduction par ledit élément de panneau, ledit moyen de transition comprenant une surface d'entrée (10, 65, 122, 126, 131, 136, 141) à une extrémité formée pour permettre à une source lumineuse d'être facilement focalisée sur celle-ci, et une surface de sortie (123, 127, 132, 137, 143) à une autre extrémité ayant une forme correspondant substantiellement à la forme dudit bord d'entrée dudit élément de panneau et raccordée à celui-ci.

2. Ensemble selon la revendication 1, caractérisé en outre en ce que ledit élément de panneau (24) est formé en une forme d'onde d'un modèle prédéterminé ayant des courbures en regard l'une de l'autre (26) s'étendant généralement transversalement à travers la largeur entière dudit élément de panneau (24) à des intervalles espacés le long de la longueur axiale dudit élément de panneau (24) qui provoque l'émission de la lumière conduite par ledit élément de panneau (24) à partir desdites courbures.

3. Ensemble selon la revendication 2, caractérisé en outre par un revêtement (29) sur ledit élément de panneau (24) ayant un indice de réfraction qui fait varier l'atténuation de la lumière émise par ledit élément de panneau (24).

4. Ensemble selon la revendication 1 caractérisé en outre en ce que ledit moyen de transition comprend un élément transparent solide (125, 130, 135, 140).

5. Ensemble selon la revendication 4 caractérisé en outre en ce que ledit moyen de transition (135) comprend une pluralité de surfaces d'entrée (136) pour recevoir la lumière focalisée d'une pluralité de sources lumineuses.

6. Ensemble selon la revendication 4 caractérisé en outre par une pluralité d'éléments de panneau transparents solides, ledit moyen de transition (135) comprenant une pluralité de surfaces de sortie (136) pour transmettre la lumière focalisée à ladite pluralité d'éléments de panneau.

7. Ensemble selon la revendication 1 caractérisé en outre par une surface prismatique (32, 46, 52, 60) sur une des surfaces dudit élément de panneau.
